# EUROPÄISCHE PATENTSCHRIFT

(11) **EP 2 490 086 B1**
(45) Veröffentlichungstag und Bekanntmachung des Hinweises auf die Patenterteilung: **02.10.2013**
(21) Anmeldenummer: 11154657.8
(22) Anmeldetag: 16.02.2011
(51) Int. Cl.: G05B 19/042, G06F 9/445

(54) **Verfahren zum Betrieb eines Automatisierungssystems und nach dem Verfahren arbeitendes Computerprogramm**
Method for operating an automation system and computer program operating by the method
Procédé de fonctionnement de systèmes d'automatisation et programme informatique fonctionnant selon ce procédé

(43) Veröffentlichungstag der Anmeldung: 22.08.2012
(73) Patentinhaber: Siemens Aktiengesellschaft, 80333 München (DE)
(72) Erfinder: Helmig, Dieter, 90475 Nürnberg (DE); Knobloch, Kolja, 92318 Neumarkt i.d. Oberpfalz (DE); Meckel, Jens, 90559 Burgthann (DE); Schellbach, Nico, 90471 Nürnberg (DE); Schwarz, Dirk, 91349 Egloffstein (DE)

(56) Entgegenhaltungen:
- EP-A1- 1 674 954
- WO-A1-2005/008349
- US-A1- 2008 301 661
- US-A1- 2010 249 956

## Beschreibung

Die Erfindung betrifft ein Verfahren zum Betrieb eines Automatisierungssystems, wobei das Automatisierungssystem zur Steuerung und/oder Überwachung eines technischen Prozesses, zum Beispiel eines industriellen Produktionsprozesses, vorgesehen ist und dafür in an sich bekannter Art und Weise mindestens eine Steuerungseinheit und mindestens eine Bedien- und Beobachtungseinheit umfasst.

Der Begriff Steuerungseinheit umfasst sämtliche Geräte, Einrichtungen oder Systeme, also neben z.B. Steuerungen, wie speicherprogrammierbaren Steuerungen, Prozessrechnern, (Industrie-)Computern und dergleichen auch Antriebssteuerungen, Frequenzumrichter und Ähnliches, wie sie zur Steuerung, Regelung und/oder Überwachung technologischer Prozesse z.B. zum Umformen oder Transportieren von Material, Energie oder Information etc. eingesetzt werden oder einsetzbar sind, wobei insbesondere über geeignete technische Einrichtungen, wie zum Beispiel Sensoren oder Aktoren, Energie aufgewandt oder gewandelt wird. Als Steuerungs- sowie Bedien- und Beobachtungseinheiten kommen insbesondere die von der Anmelderin und der Marke Simatic oder Sinumerik angebotenen Geräte in Betracht. Diese sind hinsichtlich ihrer grundsätzlichen Funktionalität an sich bekannt. Am Beispiel einer speicherprogrammierbaren Steuerung als Steuerungseinheit sei dafür in Erinnerung gerufen, dass diese mehrere Funktionseinheiten umfasst, die bei modularer Ausführung als separate Baugruppen ausgeführt sind, nämlich eine Zentraleinheit (CPU-Einheit) sowie Signal-, Funktions- und Kommunikationsbaugruppen. Die Zentraleinheit arbeitet während des Steuerbetriebs zyklisch ein Steuerungsprogramm ab, welches ein Programmierer mit einem mit einem allgemein als Engineeringsystem bezeichneten Software-Werkzeug versehenen Programmiergerät oder dergleichen erstellt und welches zur Lösung einer Automatisierungsaufgabe, nämlich zum Beispiel zur Steuerung oder Überwachung des jeweiligen technischen Prozesses, vorgesehen ist. Details eines solchen Engineeringsystems sind zum Beispiel in der EP 1 674 954 A beschrieben. Während des Steuerungsbetriebs liest die Zentraleinheit zunächst die Signalzustände an allen physikalischen Prozesseingängen ab und bildet ein sogenanntes Prozessabbild der Eingänge. Das Steuerungsprogramm wird weiter unter Einbeziehung interner Zähler, Merker und Zeiten schrittweise abgearbeitet, und schließlich hinterlegt die Zentraleinheit die errechneten Signalzustände im sogenannten Prozessabbild der Prozessausgänge, von welchem diese Signalzustände zu den physikalischen Prozessausgängen gelangen.

Bei heute üblichen, vergleichsweise komplexen Automatisierungssystemen sind ein oder mehrere Bedien- und Beobachtungseinheiten, die in der Fachterminologie auch als HMI-Geräte (HMI = human machine interface) bezeichnet werden, vorgesehen. Im Folgenden wird die Beschreibung ohne Einschränkung der weitergehenden Allgemeingültigkeit hinsichtlich der verwendeten Begriffe für ein Automatisierungssystem mit jeweils genau einer Steuerungseinheit und genau einer Bedien- und Beobachtungseinheit fortgesetzt. Demgemäss wird entsprechend auch nur von einem Steuerungsprogramm und einem Bedien- und Beobachtungsprogramm gesprochen. Die Bedien- und Beobachtungseinheit wird mitunter kurz auch nur als HMI-Gerät bezeichnet.

Ein HMI-Gerät ist grundsätzlich zur Visualisierung des technischen Prozesses und/oder der Steuerungsvorgänge der Automatisierungslösung vorgesehen. Üblich ist demnach eine Darstellung von Prozesszuständen - zum Beispiel "Motor läuft", "Motor steht", usw. -, Messwerten, wie Temperaturen oder dergleichen, usw.. Solche Prozesszustände werden im Rahmen der Abarbeitung des Steuerungsprogramms aus dem technischen Prozess aufgenommen oder ergeben sich im Rahmen der Abarbeitung des Steuerungsprogramms aufgrund der Funktionalität des Steuerungsprogramms und der dort vorgesehenen Verknüpfungen von externe oder interne Zustände kodierenden Daten. Ein auf dem HMI-Gerät ablaufendes Bedien- und Beobachtungsprogramm - im Folgenden mitunter kurz als HMI-Programm bezeichnet - umfasst Grundfunktionalitäten zur Darstellung einfacher und zusammengesetzter graphischer Elemente sowie Zahlen und Text. Das HMI-Programm greift hinsichtlich der jeweils konkret darzustellenden Daten auf diejenigen Daten zu, die das Steuerungsprogramm verwendet oder generiert. Für letzteres hat das HMI-Programm in an sich bekannter Art und Weise Zugriff auf die insoweit benötigten Daten, also zum Beispiel indem die Daten an das HMI-Gerät zur Verwendung durch das HMI-Programm übertragen werden.

Immer wenn sich eine Notwendigkeit für Änderungen oder Ergänzungen des Steuerungsprogramms ergibt, können sich solche Änderungen oder Ergänzungen - im Folgenden Zusammenfassend als Änderungen bezeichnet - auch auf das HMI-Programm auswirken. Dies hat bisher zu der Notwendigkeit geführt, manuell entsprechend aktualisierte HMI-Programme zum jeweiligen HMI-Gerät zu übertragen und dort zu starten. Eine solche manuelle Übertragung ist zum Beispiel auch bei dem in der WO 2005/008349 A beschriebenen Ansatz erforderlich. Dies ist zeitaufwändig aber auch - speziell bei komplexeren Automatisierungssystemen mit mehreren HMI-Geräten - fehleranfällig, denn der jeweilige Betreiber des Automatisierungssystems muss die Zusammenhänge zwischen den einzelnen davon umfassten Einheiten kennen um beurteilen zu können, wann er welche Teile der Automatisierungslösung bei welchen Einheiten nachladen muss. Neben dem Aspekt der Zeitaufwändigkeit und Fehleranfälligkeit kommt noch hinzu, dass es für mit solchen Aufgaben befasstes Personal mitunter eines nicht unerheblichen Schulungsaufwands bedarf, bis eine ausreichende Sicherheit und Routine erreicht ist.

Bei einem Verfahren zum Betrieb eines Automatisierungssystems der oben skizzierten Art, bei dem für das Automatisierungssystem zentral mit einem Engineeringsystem eine Automatisierungslösung mit einem Steuerungsprogramm und einem Bedien- und Beobachtungsprogramm (HMI-Programm) erstellt wird, besteht demgemäss eine Aufgabe der Erfindung darin, die bisherigen Nachteile zu vermeiden oder zumindest deren Auswirkungen zu reduzieren, insbesondere die Handhabbarkeit der Automatisierungslösung bei der Inbetriebnahme oder Wiederinbetriebnahme zu verbessern.

Diese Aufgabe wird mit einem Verfahren zum Betrieb eines Automatisierungssystems mit den Merkmalen des Anspruchs 1 gelöst. Dazu ist, wenn während des Betriebs des Automatisierungssystems ein Steuerungsprogramm und ein HMI-Programm einer zentral erstellten Automatisierungslösung oder Teile derselben an mindestens eine Steuerungseinheit des Automatisierungssystems und an mindestens eine Bedien- und Beobachtungseinheit (HMI-Gerät) des Automatisierungssystems übermittelt werden, vorgesehen, dass die Steuerungseinheit beim Erhalt eines Steuerungsprogramms automatisch die Bedien- und Beobachtungseinheit über das Vorliegen eines neuen Steuerungsprogramms und/oder das Vorliegen eines neuen Bedien- und Beobachtungsprogramms informiert.

Der Vorteil der Erfindung besteht darin, dass durch die automatische Information an die Bedien- und Beobachtungseinheit oder zumindest jede von der Änderung oder Ergänzung betroffene Bedien- und Beobachtungseinheit, für das Personal die Notwendigkeit entfällt, entscheiden oder erkennen zu müssen, an welcher Bedien- und Beobachtungseinheit im Nachgang zu der Änderung oder Ergänzung des Steuerungsprogramms ebenfalls Änderungen nachgeladen werden müssen.

Eine automatische Übertragung von Daten von einer Steuerungseinheit an eine Bedien- und Beobachtungseinheit ist aus der US 2010/0249956 A bekannt. Dort allerdings zum Zwecke der Datensicherung um bei einem Ausfall der Steuerungseinheit die dort ursprünglich vorhandenen Daten schnell wiederherstellen zu können.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn für eine neue Automatisierungslösung das Steuerungsprogramm um einen neuen oder geänderten Programmbaustein aus einer Programmbausteinbibliothek ergänzt wird und der Programmbaustein in der Programmbausteinbibliothek mit einem Bildbaustein für die Bedien- und Beobachtungseinheit assoziiert ist, besteht ein auch automatisch nachvollziehbarer Zusammenhang zwischen dem Programmbaustein für das Steuerungsprogramm und dem Bildbaustein für das Bedien- und Beobachtungsprogramm. Beim Übertragen des Steuerungsprogramms an die Steuerungseinheit wird der mit dem neuen Programmbaustein assoziierte Bildbaustein automatisch an die Bedien- und Beobachtungseinheit übertragen, so dass Änderungen des Programmbausteins, die sich auf das Bedien- und Beobachtungsprogramm auswirken durch den entsprechend geänderten Bildbaustein unmittelbar auch auf Seiten der Bedien- und Beobachtungseinheit zur Verfügung stehen.

Auf dieser Basis kann in einer weiteren Ausführungsform vorgesehen sein, dass beim Ergänzen des Steuerungsprogramms um einen neuen oder geänderten Programmbaustein das Bedien- und Beobachtungsprogramm automatisch um den mit dem neuen oder geänderten Programmbaustein assoziierten Bildbaustein ergänzt wird. Die Änderungen stehen damit nicht nur auf Seiten der Bedien- und Beobachtungseinheit für eine anschließende manuelle Bearbeitung zur Verfügung sondern stehen unmittelbar als Bestandteil eines entsprechend geänderten Bedien- und Beobachtungsprogramms zur Verfügung. Evtl. entfällt hier bei speziellen oder nur geringfügigen Änderungen die Notwendigkeit einer anschließenden manuellen Bearbeitung. Zumindest ist der Umfang einer evtl. notwendigen manuellen Bearbeitung reduziert.

Weiter kann vorgesehen sein, dass die Bedien- und Beobachtungseinheit einen neuen oder geänderten Bildbaustein als neu oder geändert erkennt, zum Beispiel anhand einer Prüfsumme, eines von der Steuerungseinheit beim Übertragen diesbezüglich gesetzten flags, usw., und auf einer mit der Bedien- und Beobachtungseinheit kommunikativ verbundenen oder einer von der Bedien- und Beobachtungseinheit umfassten Anzeigeeinrichtung einen diesbezüglichen optischen Hinweis generiert. Bedienpersonal ist dann unmittelbar darüber orientiert ist, auch welche Bestandteile der Darstellung zur Benuterführung auf der Bedien- und Beobachtungseinheit die vorgenommenen Änderungen Auswirkungen haben und kann sodann kontrollieren, ob das oder jedes betroffene Anzeige- und oder Bedienfeld noch bestimmungsgemäß arbeitet.

Speziell kann dabei in einer vorteilhaften Ergänzung vorgesehen sein, dass die Bedien- und Beobachtungseinheit eine Konsistenzprüfung durchführt und bei einem gelöschten Programmbaustein jedes mit diesem verbundene Bedienfeld als fehlerhaft markiert oder Verwendungen solcher Bedienfelder verhindert, so dass Fehlbedienungen vermieden oder ausgeschlossen werden. Genauso ist zusätzlich oder alternativ möglich, dass die Bedien- und Beobachtungseinheit neue oder geänderte Daten eines neuen oder geänderten Bildbausteins automatisch an der Anzeigeeinrichtung darstellt. Bedienpersonal wird auf diese Weise automatisch über jedes neue oder geänderte Datum informiert und die Gefahr, dass ein neues oder geändertes Datum bei der Anpassung des Bedien- und Beobachtungsprogramms übersehen wird ist erheblich reduziert.

Für die Darstellung neuer oder geänderter Daten durch die Bedien- und Beobachtungseinheit kommen unterschiedliche Möglichkeiten in Betracht. Zum Beispiel eine automatische Darstellung in einer vorgegebenen oder vorgebbaren Formatierung und/oder an einer vorgegebenen oder vorgebbaren Position an der Anzeigeeinrichtung. Mit solchen Formatierungen und/oder Positionen sind geänderte Daten besonders leicht identifizierbar.

Die oben genannte Aufgabe wird auch mit einem Automatisierungssystem zur Steuerung und/oder Überwachung eines technischen Prozesses gelöst, das nach dem Verfahren wie hier und im Folgenden beschrieben arbeitet und dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen oder Programmcodemitteln und andererseits ein Speichermedium mit einem derartigen Computerprogramm sowie schließlich auch eine Steuerungseinheit oder eine Bedien- und Beobachtungseinheit, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Automatisierungssystem mit einer Steuerungseinheit und einer Bedien- und Beobachtungseinheit zur Steuerung eines technischen Prozesses,
- FIG 2: ein Steuerungsprogramm als Ergebnis einer Auswahl von in das Steuerungsprogramm integrierten Programmbausteinen aus einer Programmbausteinbibliothek,

- FIG 3: Abhängigkeiten eines Bedien- und Beobachtungsprogramms von einem Steuerungsprogramm bei in beiden verwendeten Daten,
- FIG 4: einen speziellen Programmbaustein, wie er in einer Programmbausteinbibliothek vorgehalten werden kann, mit einem Steuerungsteil für ein Steuerungsprogramm und einem Bildteil für ein Bedien- und Beobachtungsprogramm,
- FIG 5: ein Beispiel für eine Darstellung von einer Änderung eines Steuerungsprogramms beeinflusster Daten durch das Bedien- und Beobachtungsprogramm und
- FIG 6: ein Computerprogramm zur Ausführung des Verfahrens.

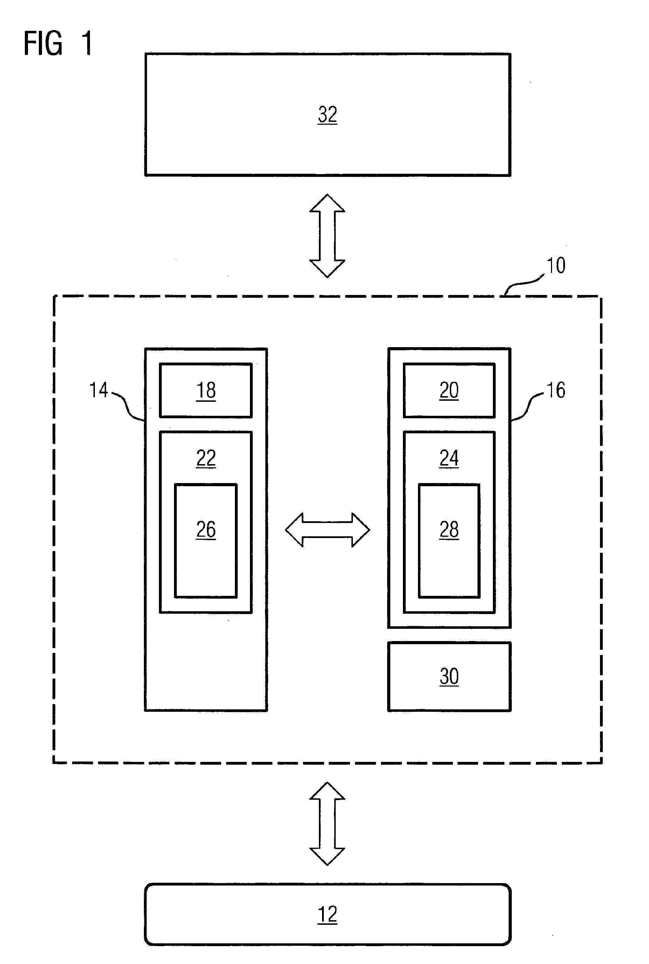

FIG 1 zeigt schematisch stark vereinfacht ein Automatisierungssystem 10 zur Steuerung und/oder Überwachung eines nicht näher dargestellten technischen Prozesses 12, zum Beispiel eines industriellen Produktionsprozesses oder eines Teilprozesses in einem solchen Produktionsprozess. Industrielle Produktionsprozesse sind in diverser Form an sich bekannt und das Automatisierungssystem 10 ist allgemein verwendbar und kommt damit grundsätzlich zur Automatisierung beliebiger technischer Prozesse 12 in Betracht.

Das Automatisierungssystem 10 umfasst zumindest eine Steuerungseinheit 14 und zumindest eine Bedien- und Beobachtungseinheit 16. Komplexe Automatisierungssysteme 10 können eine Vielzahl von Steuerungseinheiten 14 und/oder Bedien- und Beobachtungseinheiten 16 umfassen, wobei letztere im Folgenden mitunter entsprechend der üblichen Fachterminologie kurz auch nur als HMI-Geräte 16 bezeichnet werden.

Jede Steuerungseinheit 14 und Bedien- und Beobachtungseinheit 16 umfasst in an sich bekannter Art und Weise eine Verarbeitungseinheit 18, 20 nach Art eines Mikroprozessors oder dergleichen sowie einen Speicher 22, 24. Im Speicher 22 der Steuerungseinheit 14 ist als Automatisierungslösung ein Steuerungsprogramm 26 abgelegt. Entsprechend ist im Speicher 24 des HMI-Gerätes 16 ein Bedien- und Beobachtungsprogramm 28 - kurz HMI-Programm 28 - als Bestandteil der Automatisierungslösung abgelegt. Dem HMI-Gerät 16 ist in an sich bekannter Art und Weise eine Anzeigevorrichtung 30, also zum Beispiel ein Monitor, zugeordnet oder das HMI-Gerät 16 umfasst eine solche Anzeigevorrichtung 30.

Der horizontale Blockpfeil zwischen der Steuerungseinheit 14 und dem HMI-Gerät 16 verdeutlicht, dass sämtliche von dem Automatisierungssystem 10 umfassten Einheiten, also ggf. auch mehrere Steuerungseinheiten 14 und/oder mehrere HMI-Geräte 16, in an sich bekannter Art und Weise, also zum Beispiel über einen Bus, zum Beispiel einen Feldbus, kommunikativ verbunden sind. Der vertikale Blockpfeil zwischen dem Automatisierungssystem 10 und dem technischen Prozess 12 verdeutlicht die Steuerung und/oder Überwachung des technischen Prozesses 12 durch das Automatisierungssystem 10 und die davon umfassten Einheiten 14, 16, also insbesondere eine Aufnahme von Daten aus dem Prozess 12 und das Übertragen von Steuerbefehlen und dergleichen an den Prozess 12.

Die Steuerung oder Überwachung des technischen Prozesses 12 erfolgt unter Kontrolle oder entsprechend eines oder mehrerer Steuerungs- und/oder HMI-Programme 26, 28, die zusammen als Automatisierungslösung bezeichnet werden, weil deren Ausführung durch die jeweiligen Verarbeitungseinheiten 18, 20 die jeweils kodierte Steuerung oder Überwachung und damit die Automatisierung des technischen Prozesses 12 bewirkt.

Die Automatisierungslösung wird zentral mit einem allgemein als Engineeringsystem 32 bezeichneten Software-Werkzeug erstellt. Das Engineeringsystem 32 läuft dabei auf einem Programmiergerät oder dergleichen, das auch als Bestandteil des Engineeringsystems 32 aufgefasst werden kann. Der vertikale Blockpfeil zwischen dem Engineeringsystem 32 und dem Automatisierungssystem 10 verdeutlicht die Übermittlung der Automatisierungslösung an das Automatisierungssystem 10 und die davon umfassten Einheiten 14, 16.

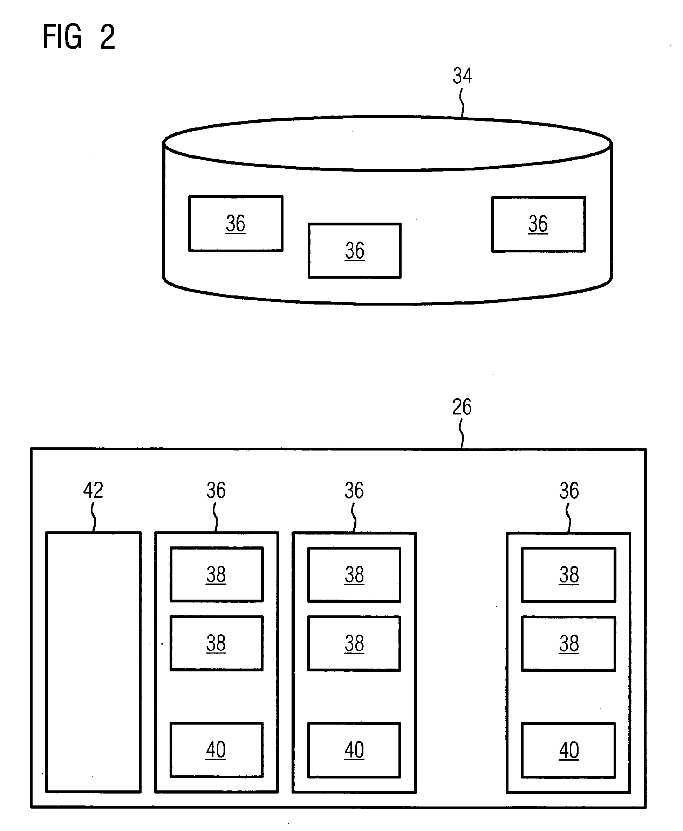

FIG 2 zeigt - ebenfalls schematisch stark vereinfacht - den grundsätzlichen Ablauf bei der Erstellung einer Automatisierungslösung mit einem Engineeringsystem 32 (FIG 1). Das Engineeringsystem 32 umfasst oder hat Zugriff auf eine Datenbasis in Form von zumindest einer Programmbausteinbibliothek 34. Diese umfasst Vorlagen, also sogenannte Typen, für in einer Automatisierungslösung verwendbare Programmbausteine 36.

Im Folgenden wird etwas unscharf nicht zwischen einem in einem Steuerungsprogramm 26 verwendeten (instanziierten) Programmbaustein 36 und einer Vorlage für solche und andere Programmbausteine 36 in der Programmbausteinbibliothek 34 unterschieden. Allerdings ergibt sich jeweils anhand des Kontextes, ob eine Instanz eines Programmbausteins 36 in einer Automatisierungslösung oder der Typ eines Programmbausteins 36 in einer Programmbausteinbibliothek 34 gemeint ist. Jedenfalls stehen in der Programmbausteinbibliothek 34 Programmbausteine 36 zur Verwendung für eine jeweilige Automatisierungslösung zur Verfügung.

FIG 2 zeigt im unteren Bereich ein Steuerungsprogramm 26 mit einer Mehrzahl dort verwendeter Programmbausteine 36. Jeder Programmbaustein 36 umfasst in an sich bekannter Art und Weise Daten 38 in einem Datenbereich und einen Programmcodebereich 40. Mit jedem Programmbaustein 36 ist eine bereits bei dessen Aufnahme in die Programmbausteinbibliothek 34 weitgehend vorgegebene Grundfunktionalität assoziiert. So gibt es beispielsweise Programmbausteine, die Reglerfunktionalität (zum Beispiel P-Regler, PI-Regler, usw.) implementieren oder auch Programmbausteine, die eine komplette Geschwindigkeits- oder Lageregelung für einen Antrieb, wie er zum Beispiel bei einer Produktionsmaschine verwendbar ist, implementieren. Je nach technischem Prozess 12 (FIG 1) wird demnach bei der Erstellung der Automatisierungslösung so weit wie möglich auf vordefinierte Programmbausteine 36 aus einer Programmbausteinbibliothek 34 zurückgegriffen. Innerhalb des Steuerungsprogramms 26 wird dann zumindest eine Aufrufreihenfolge der für das Steuerungsprogramm 26 vorgesehenen Programmbausteine festgelegt. Dafür ist ein spezieller sogenannter Organisationsbaustein 42 vorgesehen. Für die einzelnen Programmbausteine 36 werden als deren Daten 38 jeweils notwendige Werte, zum Beispiel Maximalgeschwindigkeiten, Sollgeschwindigkeiten, Endlagen, usw. oder Regelparameter eingetragen. Einzelne Daten 38 der Programmbausteine 36 kommen für eine Darstellung durch das HMI-Gerät 16 auf dessen Anzeigevorrichtung 30 in Betracht. Gleichfalls kommt das HMI-Gerät 16 und dessen HMI-Programm 28 für die Veränderung solcher Daten 28 in Betracht, zum Beispiel wenn eine Sollgeschwindigkeit für einen Antrieb angepasst werden muss.

Wenn in der Programmbausteinbibliothek 34 oder einer Programmbausteinbibliothek 34 Änderungen an einem Programmbaustein 36 vorgenommen werden und der geänderte Bausteintyp Basis für einen Programmbaustein 36 des Steuerungsprogramms 26 ist, kann die Änderung auch Auswirkungen auf den HMI-Teil der Automatisierungslösung haben. Konkret ist dies fast immer dann der Fall, wenn ein neues Datum 38 hinzugefügt wird, ein Datum 38 aus dem Programmbaustein 36 gelöscht wird oder der Typ eines Datums 38 geändert wird. Selbstverständlich ergeben sich Auswirkungen auf den HMI-Teil dann nicht, wenn das solchermaßen geänderte Datum 38 nur für die interne Verarbeitung des Steuerungsprogramms 26 benötigt wird. Wenn es sich aber um ein Datum 38 handelt, dass durch ein HMI-Gerät 16 angezeigt wird und/oder für das mittels des HMI-Geräts 16 eine Eingabe vorgesehen ist, hat die Änderung an dem Programmbaustein 36 auch eine notwendige Anpassung des HMI-Programms 28 zur Folge.

Zur Vereinfachung der damit im Zusammenhang stehenden, normalerweise notwendigen Arbeitsschritte ist bei einem Verfahren zum Betrieb eines mindestens eine Steuerungseinheit 14 (FIG 1) und mindestens eine Bedien- und Beobachtungseinheit 16 (FIG 1) umfassenden Automatisierungssystems 10 (FIG 1), für das zentral mit einem Engineeringsystem 32 (FIG 1) eine Automatisierungslösung mit einem Steuerungsprogramm 26 (FIG 1; FIG 2) und einem Bedien- und Beobachtungsprogramm 28 (FIG 1) erstellt wird, folgendes vorgesehen: Die Automatisierungslösung, also das Steuerungsprogramm 26 und das Bedien- und Beobachtungsprogramm/HMI-Programm 28 oder dessen Teile werden an mindestens eine Steuerungseinheit 14 und an mindestens eine Bedien- und Beobachtungseinheit 16 zur Steuerung und/oder Überwachung eines technischen Prozesses 12 (FIG 1) übermittelt. Dabei informiert die Steuerungseinheit 14 beim Erhalt eines Steuerungsprogramms 26 die Bedien- und Beobachtungseinheit 14 über das Vorliegen eines neuen Steuerungsprogramms 26 und/oder das Vorliegen eines neuen Bedien- und Beobachtungsprogramms 28.

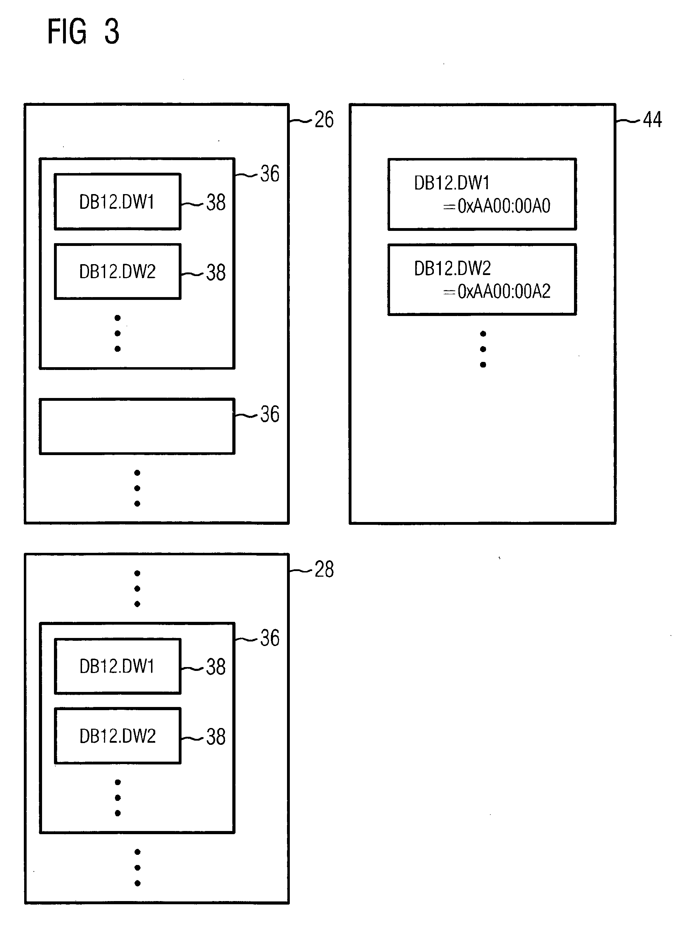

Dies soll im Folgenden anhand eines Beispiels mit weiteren Details erläutert werden: FIG 3 zeigt dazu die Automatisierungslösung mit Steuerungs- und HMI-Programm 26, 28 zum späteren sogenannten Herunterladen auf die Steuerungseinheit 14 und das HMI-Gerät 16. Für das Steuerungsprogramm 26 ist dargestellt, dass dieses (vergleiche auch FIG 2) eine Mehrzahl von Programmbausteintypen verwendet und das jeder Programmbaustein 36 die Verwendung einer Mehrzahl von Daten 38 vorsieht. Bei der Instanziierung eines Programmbausteins 36 im Zusammenhang mit dessen Herunterladen auf die Steuerungseinheit 14 wird für den Programmbaustein 36 und die davon umfassten Daten 38 im Speicher 22 der Steuerungseinheit 14 Speicherplatz belegt und somit ergibt sich für jedes Datum 38 eine konkrete Speicheradresse. Auf jedes Datum 38 kann anhand der jeweiligen Speicheradresse oder anhand eines Bezeichners zugegriffen werden. Exemplarisch sind in FIG 3 einzelne Bezeichner in der für speicherprogrammierbare Steuerungen als Beispiel für eine Steuerungseinheit 14 üblichen Notation dargestellt, nämlich "DB12.DW1" und "DB12.DW2". Der erste Teil des Bezeichners, nämlich "DB12", bezieht sich dabei auf den jeweiligen Datenbaustein 36, hier also auf einen fiktiven Datenbaustein mit der Organisationsnummer zwölf. Der zweite Teil des Bezeichners bezieht sich auf das jeweilige Datum, wobei zum Beispiel "DW1" ein erstes Datum 38 des Typs "Wort" (also zwei Byte) des Programmbausteins 36 bezeichnet. Solche Bezeichner sind auch als symbolische Bezeichner bekannt und anhand der späteren Adresse des jeweiligen Programmbausteins 36 im Speicher 22 einer Steuerungseinheit 14 lässt sich der erste Teil eines solchen Bezeichners auflösen. Der zweite Teil des Bezeichners stellt dann noch einen relativen sogenannten Offset zur Speicheradresse des Programmbausteins dar. Anstelle solcher abstrakten symbolischen Bezeichner sehen moderne Programmiersprachen und Entwicklungsumgebungen auch konkrete symbolische Bezeichner vor, also zum Beispiel "Sollgeschwindigkeit Fahrantrieb" anstelle von DB12.DW1 und dergleichen.

Letztlich kommt es auf die Art der Bezeichnung auch nicht an, sondern auf die Tatsache, dass jedes in der Automatisierungslösung verwendete Datum 38 in einem Speicher 22 eine konkrete und referenzierbare Adresse hat. Wenn nämlich ein Datum 38 eines Programmbausteins 36 auch für die HMI-Seite relevant ist, muss die HMI-Seite, also das oder jedes betroffene HMI-Gerät 16, auf das Datum 38 Zugriff haben, also auf den Speicherort des Datums 38 oder ggf. einen Speicherort mit einer Kopie des Datums 38. Eine Relevanz eines Datums 38 auf der HMI-Seite kann sich daraus ergeben, dass der jeweilige Datenbaustein 36 auch "HMI-Bestandteile" umfasst und somit ganz oder mit seinen für die HMI-Seite relevanten Bestandteilen Eingang in das HMI-Programm 28 findet.

Zum Zugriff auf die Speicheradresse eines Datums 38 ist eine Referenztabelle 44 bekannt, wie sie exemplarisch und aus Gründen der Übersichtlichkeit stark vereinfacht auf der rechten Seite der Darstellung in FIG 3 gezeigt ist. Diese ergibt sich automatisch in an sich bekannter Art und Weise mit dem Herunterladen eines Steuerungsprogramms 26 auf eine Steuerungseinheit 14. Wenn der Datenbaustein 36 mit der Ordnungsnummer zwölf ("DB12") im Speicher 22 der Steuerungseinheit 14 an der Adresse "AA00" angelegt wird und ein Datenteil des Programmbausteins 36 vor oder hinter einem Programmcodebereich 40 des Programmbausteins 36 ab einer relativen Adresse "00A0" beginnt, lautet die Startadresse des ersten Datums 38 "AA00:00A0". Die Startadressen aller nachfolgenden Daten ergeben sich anhand des Typs, also des Speicherplatzbedarfs der vorangehenden Daten. Wenn hier das erste Datum 38 als Wort zwei Byte belegt, lautet die Startadresse des nächsten Datums 38 "AA00:00A2", usw. Wenn innerhalb des Steuerungsprogramms 26 der Wert des ersten Datums 38 des Datenbausteins 36 mit der Ordnungsnummer zwölf verwendet wird, kann eine diesbezügliche Referenz einmalig zum Zeitpunkt des Herunterladens auf die Steuerungseinheit 14 oder bei jedem Zugriff auf das Datum 38 durch die mit dem Datum 38 in der Referenztabelle 44 assoziierte Adresse ersetzt werden. Gleiches gilt grundsätzlich, wenn der Wert des ersten Datums 38 dieses Datenbausteins 36 auch im HMI-Programm 28 verwendet werden soll. Für jedes andere Datum 38 gilt das oben Gesagte entsprechend.

Dieses Beispiel macht aber auch deutlich, dass, wenn mit einer Änderung oder Ergänzung des Steuerungsprogramms 26 eine Änderung der Position der jeweils bearbeiteten Daten 38 im Speicher 22 einhergeht, die Änderung des Steuerungsprogramms 26 auch Auswirkungen auf das HMI-Programm 28 hat. Deshalb ist vorgesehen, dass die Steuerungseinheit 14 beim Erhalt eines Steuerungsprogramms 26 die Bedien- und Beobachtungseinheit 16 über das Vorliegen eines neuen Steuerungsprogramms 26 und/oder das Vorliegen eines neuen Bedien- und Beobachtungsprogramms 28 informiert.

Eine solche Information an das HMI-Gerät 16 oder jedes betroffene HMI-Gerät 16 kann anhand der Referenztabelle 44 erfolgen, zum Beispiel, indem die Steuerungseinheit 14 dem oder jedem jeweiligen HMI-Gerät mitteilt, dass sich der Speicherort eines Datums 38 geändert hat. Die Mitteilung kann auch den neuen Speicherort des oder jedes betroffenen Datums 38 umfassen.

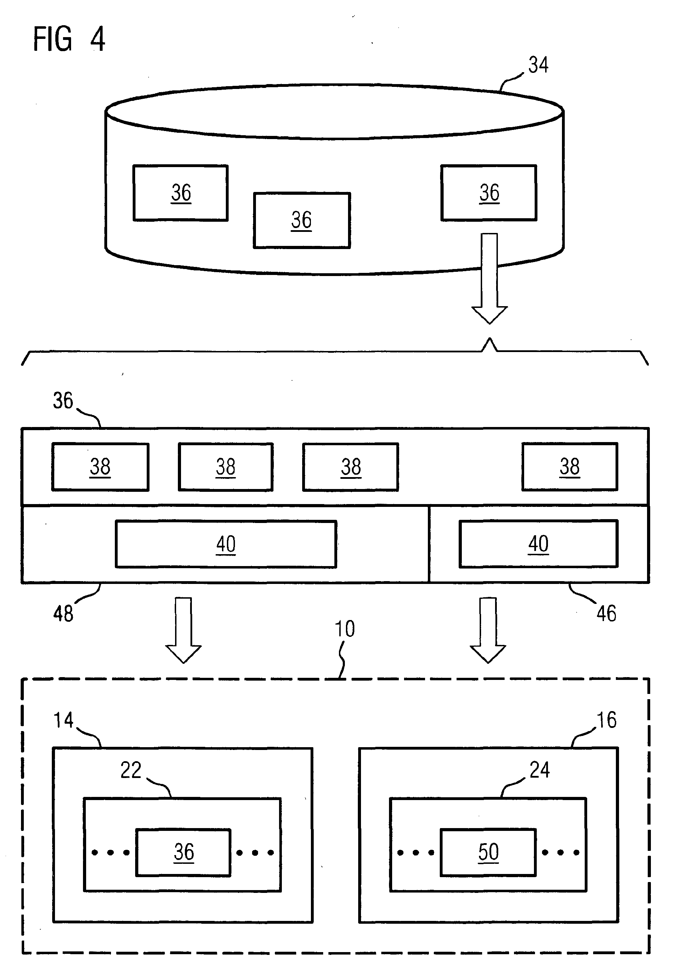

Bei der in FIG 4 skizzierten Ausführungsform ist vorgesehen, dass zumindest einzelne Programmbausteine 36 aus der Programmbausteinbibliothek 34 (FIG 2) oder einer von mehreren derartigen Programmbausteinbibliotheken 34 jeweils mit einem Bildteil oder HMI-Teil 46 assoziiert sind. Zur Unterscheidung vom hier neu hinzugekommenen HMI-Teil 46 wird der die bisherige Funktionalität des Programmbausteins 36 umfassende Teil als Steuerungsteil 48 bezeichnet. Die Daten 38 gelten sowohl für den Steuerungsteil 48 wie auch für den HMI-Teil 46, wobei grundsätzlich auch eine exklusive Gültigkeit von Daten 38 nur für den HMI-Teil 46 oder nur für den Steuerungsteil 48 denkbar ist (nicht dargestellt). Beim Herunterladen des Programmbausteins 36 als Bestandteil einer Automatisierungslösung gelangt dessen Steuerungsteil 48 als Bestandteil des Steuerungsprogramms 26 (FIG 2; FIG 3) in den Speicher 22 der Steuerungseinheit 14 und dessen HMI-Teil 46 als Bestandteil des HMI-Programms 28 (FIG 2; FIG 3) in den Speicher 24 des HMI-Geräts 16. Als Bestandteil des Steuerungsprogramms 26 werden der Steuerungsteil 48 des Programmbausteins 36 und sonstige in das Steuerungsprogramm 26 einfliessende Elemente, zum Beispiel Daten 38, weiterhin als Programmbaustein 36 bezeichnet. Als Bestandteil des HMI-Programms 28 werden der HMI-Teil 46 des Programmbausteins 36 und sonstige in das HMI-Programm 26 einfliessende Elemente, zum Beispiel Daten 38, zur Unterscheidung als Bildbaustein 50 bezeichnet.

Für Programmbausteine 36 die in dieser Art mit einem Bildbaustein 50 oder einem HMI-Teil 46 als Basis für einen Bildbaustein 50 assoziiert sind, kann beim Übertragen eines Steuerungsprogramms 26 an die Steuerungseinheit 14 der mit dem Programmbaustein 36 assoziierte Bildbaustein 50 automatisch an die Bedien- und Beobachtungseinheit 16, also das jeweilige HMI-Gerät 16 übertragen werden. Gleiches gilt, wenn anstelle eines kompletten Steuerungsprogramms 26 nur der oder jeder jeweils geänderte Programmbaustein 36 an die Steuerungseinheit 16 übertragen wird und sich das Steuerungsprogramm 26 erst durch die Kombination bisherige Programmbausteine 36 und sonstiger Bestandteile und neuer oder geänderter Programmbausteine 36 ergibt.

Eine solche automatische Übertragung an das oder jedes betroffene HMI-Gerät 16 hat zur Folge, dass bei Änderungen des Programmbausteins 36 in der Programmbausteinbibliothek, etwa aufgrund eines neu hinzukommenden Datums 38, eines hinsichtlich seines Typs geänderten Datums 38 oder eines entfernten Datums 38, diese Änderungen unmittelbar mit der Übertragung an die Steuerungseinheit 14 bei dieser und damit mittelbar mit der automatischen Übertragung an das HMI-Gerät 16 auch bei diesem bekannt sind.

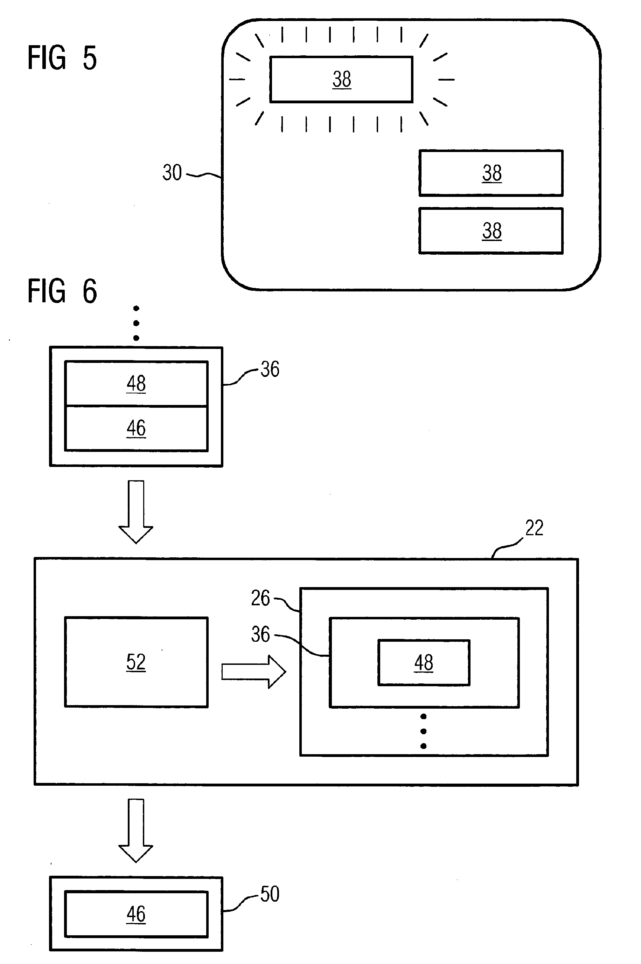

Das HMI-Gerät 16 kann einen neuen oder geänderten Bildbaustein 50 auf an sich bekannte Art und Weise, zum Beispiel anhand einer Prüfsumme oder eines von der Steuerungseinheit vor der Übertragung am Bildbaustein 50 gesetzten flags, als neu oder geändert erkennen und auf einer mit dem HMI-Gerät 16 kommunikativ verbundenen oder einer von dem HMI-Gerät 16 umfassten Anzeigeeinrichtung 30 (FIG 1) einen diesbezüglichen optischen Hinweis generieren. Genauso kann das HMI-Gerät 16 auch eine Konsistenzprüfung durchführen und bei einem gelöschten Baustein, speziell bei einem vorher vorhanden und jetzt nicht mehr vom HMI-Programm umfassten Bildbaustein 50, ein mit diesem in der Darstellung auf der Anzeigevorrichtung 30 verbundenes Bedienfeld als fehlerhaft markieren und/oder neue oder geänderte Daten eines neuen oder geänderten Bildbausteins 50 automatisch als solche an der Anzeigeeinrichtung 30 darstellen, zum Beispiel in einer vorgegeben oder vorgebbaren Formatierung, nämlich einer vorgegeben oder vorgebbaren Farbe, mit einem vorgegebenen oder vorgebbaren Hintergrund, in einer vorgegebenen oder vorgebbaren Schrifttype, usw. Zusätzlich oder alternativ kommt in Betracht, dass das HMI-Gerät 16 neue oder geänderte Daten 38 eines neuen oder geänderten Bildbausteins 50 automatisch an einer vorgegebenen oder vorgebbaren Position an der Anzeigeeinrichtung 30 darstellt. FIG 5 zeigt diesen Sachverhalt exemplarisch und erneut stark vereinfacht. Dargestellt ist die Anzeigevorrichtung 30 als Bildschirm oder Monitor. Auf dieser wird in Form von Anzeige- oder Bedienfeldern eine Mehrzahl von Daten 38 dargestellt. Das rechts oben gezeigte Datum 38/Bedienfeld ist neu oder geändert. Dies wird durch eine Formatierung, hier als Blinken dargestellt, oder durch eine vorgegeben Position, zum Beispiel wie dargestellt links oben, hervorgehoben.

Wenn ein neuer oder geänderter Programmbaustein 36 einen Bildbaustein 50 umfasst oder zumindest nach dem Herunterladen auf das Automatisierungssystem 10 zu einem Bildbaustein 50 auf dem oder einem HMI-Gerät 16 führt, kann die Steuerungseinheit bei Erhalt des geänderten Programmbausteins 36 und nach Aktualisierung der Referenztabelle 44 den Bildbaustein 50 mit den geänderten Adressdaten versehen oder verknüpfen, also den neuen Speicherort des oder jedes betroffenen Datums 38 mitteilen, so dass der Bildbaustein 50 als Bestandteil des HMI-Programms 28 trotz der Änderung des Steuerungsprogramms 26 und dadurch bedingter Verschiebungen von Daten 38 im Speicher 22 der Steuerungseinheit 14 ausführbar bleibt.

FIG 6 versucht abschließend eine notwendig stark vereinfachende Darstellung eines Computerprogramms 52, das zum Beispiel als Bestandteil eines Betriebssystems oder einer Laufzeitumgebung auf der bzw. für die Steuerungseinheit 14 ablauffähig ist. Das Computerprogramm 52 ist im Betrieb in den Speicher 22 der Steuerungseinheit 14 geladen und implementiert die bereits bekannte Funktionalität die bisher bei Steuerungseinheiten 14 eine Aktualisierung des jeweiligen Steuerungsprogramms 26 erlaubt. Die Referenztabelle 44 wird zum Beispiel durch dieses Computerprogramm 52 erstellt. Das Computerprogramm 52 ist auch die Funktionseinheit der Steuerungseinheit 14, mit der diese beim Erhalt eines Steuerungsprogramms 26 das HMI-Gerät 16 über das Vorliegen eines neuen Steuerungsprogramms 26 und/oder das Vorliegen eines neuen Bedien- und Beobachtungsprogramms 28 informiert. Wenn das neue Steuerungsprogramm 26 einen Programmbaustein 36 mit einer Basis für einen Bildbaustein 50 umfasst, übermittelt das Computerprogramm den Bildbaustein 50 oder die Daten aufgrund derer sich auf Seiten des HMI-Gerätes der Bildbaustein 50 ergibt an das HMI-Gerät 16. Diese Übermittlung ist eine Form der Information an das HMI-Gerät 16 über das Vorliegen eines neuen Steuerungsprogramms 26. Dargestellt ist insoweit ein bei der Steuerungseinheit 14 "ankommender" Programmbaustein 36, und zwar entweder einzeln, in einer Folge mehrerer Programmbausteine 36 oder als Bestandteil eines neues Steuerungsprogramms 26. Aus diesem Programmbaustein 36 extrahiert das Computerprogramm 52 den Programmbaustein für das von der Steuerungseinheit 14 auszuführende Steuerungsprogramm 26 durch Übernahme von zumindest dessen Steuerungsteil 48 (durch den nach rechts weisenden Blockpfeil verdeutlicht). Des Weiteren extrahiert das Computerprogramm 52 aus dem ankommenden Programmbaustein dessen Bildteil oder HMI-Teil 46 und sendet diesen als Basis für einen Bildbaustein 50 oder als Bestandteil eines von dem Computerprogramm 52 generierten Bildbaustein 50 an das HMI-Gerät 16 (FIG 1). Diese Übertragung ist durch den vom Computerprogramm 52 ausgehenden abwärts weisenden Blockpfeil verdeutlicht. Zur Realisierung dieser und ggf. weiterer Funktionalität wie vorangehend beschrieben weist das Computerprogramm 52 entsprechende Programmcodemittel zur Ausführung aller Schritte des hier beschriebenen Verfahrens und seiner Ausgestaltungen auf. Zur Ausführung wird das Computerprogramm 52 auf einer Steuerungseinheit 14 oder alternativ auch einer Bedien- und Beobachtungseinheit 16 ausgeführt. Der Speicher 22 der Steuerungseinheit 14 oder der Speicher 24 des HMI-Gerätes sind Bespiele für ein Computerprogrammprodukt mit Programmcodemitteln zur Ausführung aller Schritte eines Verfahrens und evtl. Ausgestaltungen wie hier beschrieben. Es versteht sich, dass das Computerprogramm 52, wenn das Automatisierungssystem 10 oder die Steuerungseinheit 14 oder das HMI-Gerät 16 nicht in Betrieb sind, auf einem digitalen Speichermedium vorgehalten werden kann, zum Beispiel einer Diskette oder einem elektronisch löschbaren Festwertspeicher, mit elektronisch auslesbaren Steuersignalen, die so mit einer Steuerungseinheit 14 und/oder einer Bedien- und Beobachtungseinheit 16 eines Automatisierungssystems zusammenwirken können, dass ein Verfahren wie hier beschreiben ausgeführt wird.

Einzelne im Vordergrund stehende Aspekte der hier eingereichten Beschreibung lassen sich damit kurz wie folgt zusammenfassen: Es wird ein Verfahren zum Betrieb eines mindestens eine Steuerungseinheit 14 und mindestens eine Bedien- und Beobachtungseinheit 16 umfassenden Automatisierungssystems 10 angegeben, wobei für das Automatisierungssystem zentral mit einem Engineeringsystem 32 eine Automatisierungslösung mit einem Steuerungsprogramm 26 und einem Bedien- und Beobachtungsprogramm 28 erstellt wird, das oder dessen Teile jeweils an mindestens eine Steuerungseinheit 14 und an mindestens eine Bedien- und Beobachtungseinheit 16 zur Steuerung und/oder Überwachung eines technischen Prozesses 12 übermittelt werden, wobei die Steuerungseinheit 14 beim Erhalt eines Steuerungsprogramms 26 die Bedien- und Beobachtungseinheit 16 über das Vorliegen eines neuen Steuerungsprogramms 26 und/oder das Vorliegen eines neuen Bedien- und Beobachtungsprogramms 28 informiert, so dass auf Seiten der Bedien- und Beobachtungseinheit 16 Änderungen des Bedien- und Beobachtungsprogramms 28 erkennbar sind oder solche Änderungen unmittelbar in das Bedien- und Beobachtungsprogramm 28 übernommen werden.

## Patentansprüche

1. Verfahren zum Betrieb eines mindestens eine Steuerungseinheit (14) und mindestens eine Bedien- und Beobachtungseinheit (16) umfassenden Automatisierungssystems (10),
wobei für das Automatisierungssystem zentral mit einem Engineeringsystem (32) eine Automatisierungslösung mit einem Steuerungsprogramm (26) und einem Bedien- und Beobachtungsprogramm (28) erstellt wird,
das oder dessen Teile jeweils an mindestens eine Steuerungseinheit (14) und an mindestens eine Bedien- und Beobachtungseinheit (16) zur Steuerung und/oder Überwachung eines technischen Prozesses (12) übermittelt werden,
wobei
die Steuerungseinheit (14) beim Erhalt eines Steuerungsprogramms (26) die Bedien- und Beobachtungseinheit (16) über das Vorliegen eines neuen Steuerungsprogramms (26) und/oder das Vorliegen eines neuen Bedien- und Beobachtungsprogramms (28) informiert,
**dadurch gekennzeichnet, dass**
für eine neue Automatisierungslösung das Steuerungsprogramm (26) um einen neuen oder geänderten Programmbaustein (36) aus einer Programmbausteinbibliothek (34) ergänzt wird, wobei der Programmbaustein in der Programmbausteinbibliothek (34) mit einem Bildbaustein (50) assoziiert ist, und
dass beim Übertragen des Steuerungsprogramms an die Steuerungseinheit (14) der mit dem neuen Programmbaustein (36) assoziierte Bildbaustein (50) automatisch an die Bedien- und Beobachtungseinheit (16) übertragen wird.

2. Verfahren nach Anspruch 1,
wobei beim Ergänzen des Steuerungsprogramms (26) um einen neuen oder geänderten Programmbaustein (36) das Bedien- und Beobachtungsprogramm (28) automatisch um den mit dem neuen oder geänderten Programmbaustein (36) assoziierten Bildbaustein (50) ergänzt wird.

3. Verfahren nach einem der Ansprüche 1 oder 2,
wobei die Bedien- und Beobachtungseinheit (16) einen neuen oder geänderten Bildbaustein (50) als neu oder geändert erkennt und auf einer mit der Bedien- und Beobachtungseinheit (16) kommunikativ verbundenen oder einer von der Bedien- und Beobachtungseinheit (16) umfassten Anzeigeeinrichtung (30) einen diesbezüglichen optischen Hinweis generiert.

4. Verfahren nach einem der Ansprüche 1, 2 oder 3,
wobei die Bedien- und Beobachtungseinheit (16) eine Konsistenzprüfung durchführt und bei einem gelöschten Baustein ein mit diesem verbundenes Bedienfeld als fehlerhaft markiert.

5. Verfahren nach einem der Ansprüche 3 oder 4,
wobei die Bedien- und Beobachtungseinheit (16) neue oder geänderte Daten eines neuen oder geänderten Bildbausteins (50) automatisch an der Anzeigeeinrichtung (30) darstellt.

6. Verfahren nach einem der Ansprüche 3, 4 oder 5,
wobei die Bedien- und Beobachtungseinheit (16) neue oder geänderte Daten eines neuen oder geänderten Bildbausteins (50) automatisch in einer vorgegebenen oder vorgebbaren Formatierung und/oder an einer vorgegebenen oder vorgebbaren Position an der Anzeigeeinrichtung (30) darstellt.

7. Computerprogramm (52) mit Programmcodemitteln, zur Ausführung aller Schritte eines Verfahrens nach einem der vorangehenden Ansprüche, wenn das Computerprogramm (52) auf einer Steuerungseinheit (14), einer Bedien- und Beobachtungseinheit (16) und einem Engineeringsystem (32) ausgeführt wird.

8. Computerprogrammprodukt mit Programmcodemitteln, die auf einem computerlesbaren Datenträger gespeichert sind, zur Ausführung aller Schritte eines Verfahrens nach einem der Ansprüche 1 bis 6, wenn das Computerprogramm (52) auf einer Steuerungseinheit (14), einer Bedien- und Beobachtungseinheit (16) und einem Engineeringsystem (32) ausgeführt wird.

9. Automatisierungssystem mit mindestens einer Steuerungseinheit (14), mindestens einer Bedien- und Beobachtungseinheit (16) zur Steuerung und/oder Überwachung eines technischen Prozesses (12), und mit einem Engineeringsystem (32), wobei die Steuerungseinheit (14), die Bedien- und Beobachtungseinheit (16) und das Engineeringsystem (32) ein Computerprogrammprodukt nach Anspruch 8 umfassen.

## Claims

1. Method for operating an automation system (10) comprising at least one control unit (14) and at least one operating and monitoring unit (16),
wherein an automation solution with a control program (26) and an operating and monitoring program (28) is centrally created for the automation system using an engineering system (32), which program or the parts of which program are each transmitted to at least one control unit (14) and to at least one operating and monitoring unit (16) for controlling and/or monitoring a technical process (12),
wherein the control unit (14), upon receiving a control program (26), informs the operating and monitoring unit (16) of the presence of a new control program (26) and/or the presence of a new operating and monitoring program (28), **characterized in that**, for a new automation solution, the control program (26) is supplemented with a new or amended program module (36) from a program module library (34), wherein the program module is associated with an image module (50) in the program module library (34), and
**in that**, when transmitting the control program to the control unit (14), the image module (50) associated with the new program module (36) is automatically transmitted to the operating and monitoring unit (16).

2. Method according to Claim 1,
wherein, when supplementing the control program (26) with a new or amended program module (36), the operating and monitoring program (28) is automatically supplemented with the image module (50) associated with the new or amended program module (36).

3. Method according to either of Claims 1 and 2,
wherein the operating and monitoring unit (16) recognizes a new or amended image module (50) as new or amended and generates an optical indication in this respect on a display device (30) which is communicatively connected to the operating and monitoring unit (16) or is included in the operating and monitoring unit (16).

4. Method according to one of Claims 1, 2 and 3,
wherein the operating and monitoring unit (16) carries out a consistency check and, in the case of a deleted module, marks an operating panel associated with the latter as faulty.

5. Method according to either of Claims 3 and 4,
wherein the operating and monitoring unit (16) automatically displays new or amended data relating to a new or amended image module (50) on the display device (30).

6. Method according to one of Claims 3, 4 and 5,
wherein the operating and monitoring unit (16) automatically displays new or amended data relating to a new or amended image module (50) on the display device (30) in predefined or predefinable formatting and/or at a predefined or predefinable position.

7. Computer program (52) having program code means for carrying out all steps of a method according to one of the preceding claims when the computer program (52) is executed on a control unit (14), an operating and monitoring unit (16) and an engineering system (32).

8. Computer program product having program code means which are stored on a computer-readable data storage medium for carrying out all steps of a method according to one of Claims 1 to 6 when the computer program (52) is executed on a control unit (14), an operating and monitoring unit (16) and an engineering system (32).

9. Automation system having at least one control unit (14), at least one operating and monitoring unit (16) for controlling and/or monitoring a technical process (12) and an engineering system (32), wherein the control unit (14), the operating and monitoring unit (16) and the engineering system (32) comprise a computer program product according to Claim 8.

## Revendications

1. Procédé pour faire fonctionner un système ( 10 ) d'automatisation comprenant au moins une unité ( 14 ) de commande et au moins une unité ( 16 ) de service et d'observation,
dans lequel on établit, pour le système d'automatisation centralement par un système ( 32 ) d'ingénierie, une solution d'automatisation ayant un programme ( 26 ) de commande et un programme ( 28 ) de service et d'observation,
dont on transmet des parties respectivement à au moins une unité ( 14 ) de commande et à au moins une unité ( 16 ) de service et d'observation pour la commande et/ou pour le contrôle d'un processus ( 12 ) technique,
dans lequel
l'unité ( 14 ) de commande informe, lorsqu'elle obtient un programme ( 26 ) de commande, l'unité ( 16 ) de service et d'observation de la présence d'un nouveau programme ( 26 ) de commande et/ou de la présence d'un nouveau programme ( 28 ) de service et d'observation,
**caractérisé en ce que**
pour une nouvelle solution d'automatisation, le programme ( 26 ) de commande est complété d'un module ( 36 ) de programme nouveau ou modifié provenant d'une bibliothèque ( 34 ) de module de programme, le module de programme étant associé dans la bibliothèque ( 34 ) de module de programme à un module ( 50 ) d'image et
**en ce que**, lors de la transmission du programme de commande à l'unité ( 14 ) de commande, le module ( 50 ) d'images associé au nouveau module ( 36 ) de programme est transmis automatiquement à l'unité ( 16 ) de service et d'observation.

2. Procédé suivant la revendication 1,
dans lequel, lorsque le programme ( 26 ) de commande est complété d'un module ( 36 ) de programme nouveau ou modifié, le programme ( 28 ) de service et d'observation est complété automatiquement du module ( 50 ) d'image associé au module ( 36 ) de programme nouveau ou modifié.

3. Procédé suivant l'une des revendications 1 ou 2,
dans lequel l'unité ( 16 ) de service et d'observation reconnaît comme nouveau ou modifié un module ( 50 ) d'image nouveau ou modifié et produit une indication optique correspondante sur un dispositif ( 30 ) d'affichage relié en communication avec l'unité ( 16 ) de service et d'observation ou compris dans l'unité ( 16 ) de service et d'observation.

4. Procédé suivant l'une des revendications 1, 2 ou 3,
dans lequel l'unité ( 16 ) de service et d'observation effectue un contrôle de cohérence et, si un module est effacé, repère comme défectueux un champ de service qui y est relié.

5. Procédé suivant l'une des revendications 3 ou 4,
dans lequel l'unité ( 16 ) de service et d'observation représente des données nouvelles ou modifiées d'un module ( 50 ) d'image nouveau ou modifié automatiquement sur le dispositif ( 30 ) d'affichage.

6. Procédé suivant l'une des revendications 3, 4 ou 5,
dans lequel l'unité ( 16 ) de service et d'observation représente des données nouvelles ou modifiées d'un module ( 50 ) d'image nouveau ou modifié automatiquement dans un formatage prescrit ou pouvant l'être et/ou sur une position prescrite ou pouvant l'être du dispositif ( 30 ) d'affichage.

7. Programme ( 52 ) d'ordinateur ayant des moyens de codes de programme pour la réalisation de tous les stades d'un procédé suivant l'une des revendications précédentes, lorsque le programme ( 52 ) d'ordinateur est réalisé sur une unité ( 14 ) de commande, sur une unité ( 16 ) de service et d'observation et sur un système ( 32 ) d'ingénierie.

8. Produit de programme d'ordinateur ayant des moyens de codes de programme qui sont mémorisés sur des supports de données pouvant être exploités par un ordinateur pour la réalisation de tous les stades d'un procédé suivant l'une des revendications 1 à 6, lorsque le programme ( 52 ) d'ordinateur est réalisé sur une unité ( 14 ) de commande, sur une unité ( 16 ) de service et d'observation et sur un système ( 32 ) d'ingénierie.

9. Système d'automatisation ayant au moins une unité ( 14 ) de commande, au moins une unité ( 16 ) de service et d'observation et un système ( 32 ) d'ingénierie, dans lequel l'unité ( 14 ) de commande, l'unité ( 16 ) de service et d'observation et le système ( 32 ) d'ingénierie comprennent un produit de programme d'ordinateur suivant la revendication 8.
